# EUROPÄISCHE PATENTANMELDUNG

(11) **EP 1 122 513 A2**
(43) Veröffentlichungstag der Anmeldung: **08.08.2001**
(21) Anmeldenummer: 01101305.9
(22) Anmeldetag: 20.01.2001
(51) Int. Cl.: G01C 15/00, G01B 11/24, G01S 7/481

(54) **Vermessungsvorrichtung zum Abbilden und Aufzeichnen eines dreidimensionalen Objects**

(30) Priorität: 05.02.2000 DE 10005203
(71) Anmelder: Bayerische Motoren Werke Aktiengesellschaft, 80809 München (DE)
(72) Erfinder: Lindner, Walter, 82140 Olching (DE)

(57) **Zusammenfassung**

Die Erfindung geht von einer Vermessungsvorrichtung zum Abbilden und Aufzeichnen eines dreidimensionalen Objekts mit einer in Bezug auf das Objekt unabhängig bewegbaren Messkopfeinheit, die eine Abtasteinrichtung zum Erfassen der Oberfläche eines dreidimensionalen Objekts umfasst, und mit einer Positionsdetektionseinrichtung zum Erfassen der Position und der räumlichen Lage der Abtasteinrichtung aus. Es wird erstens eine vorgegebene Anzahl von zum Objekt feststehend positionierten ersten Messpunkten in Bezug auf das Referenzsystem und zweitens dieselbe Anzahl von zur Messkopfeinheit feststehend positionierten zweiten Messpunkten in Bezug auf das Referenzsystem definiert. Je ein erster und ein zweiter Messpunkt bilden ein Messpunkte-Paar. Die Positionsdetektionseinrichtung weist den Messpunkte-Paaren zugeordnete Abstandssensoren und eine Recheneinheit auf, durch die der jeweilige Abstand zwischen den Meßpunkten jedes Messpunkte-Paares erfasst wird und durch die aus den gemessenen Abständen im Zusammenhang mit den in Bezug auf das Referenzsystem definierten Messpunkten die Position und die räumliche Lage der Messkopfeinheit zum Objekt berechnet wird.

## Beschreibung

Die Erfindung bezieht sich auf eine Vermessungsvorrichtung zum Abbilden und Aufzeichnen eines dreidimensionalen Objekts nach dem Oberbegriff des Patentanspruchs 1.

Eine derartige Vermessungsvorrichtung ist beispielsweise aus der EP 0 553 266 B1 bekannt. Diese bekannte Vermessungsvorrichtung weist eine in Bezug auf das Objekt unabhängig bewegbare Messkopfeinheit auf, die eine Abtasteinrichtung zum Erfassen der Oberfläche des dreidimensionalen Objekts umfasst. Weiterhin ist eine Positionsdetektionseinrichtung zum Erfassen der Position und der räumlichen Lage der Abtasteinrichtung zur Positionsdetektionseinrichtung vorhanden. Diese Positionsdetektionseinrichtung ist in Bezug auf das Objekt feststehend positioniert. Die Position und die räumliche Lage der Abtasteinrichtung bzw. der Messkopfeinheit zum Objekt wird in umständlicher Weise erstens aus der Kenntnis der räumlichen Lage der Positionsdetektionseinrichtung zum Objekt und zweitens aus der erfassten räumlichen Lage der Abtasteinrichtung bzw. der Messkopfeinheit zur Positionsdetektionseinheit ermittelt. Das System ist unbrauchbar, wenn sich die Positionierung der Positionsdetektionseinrichtung zum Objekt unbemerkt verändert. Weiterhin ist eine mehrfache Kalibrierung der einzelnen Komponenten zueinander erforderlich. Darüber hinaus ist die Vermessungseinrichtung standortgebunden bzw. nur durch hohen Aufwand transportierbar.

Es ist Aufgabe der Erfindung, eine Vermessungseinrichtung eingangs genannter Art im Hinblick auf eine vereinfachte Handhabung und auf eine kostengünstigere und kompaktere Bauform zu verbessern.

Diese Aufgabe wird durch die Merkmale des Patentanspruchs 1 gelöst. Vorteilhafte Ausgestaltungen der Erfindung sind die Gegenstände der abhängigen Patentansprüche.

Grundlage der Erfindung ist eine Vermessungsvorrichtung zum Abbilden und Aufzeichnen eines dreidimensionalen Objekts mit einer in Bezug auf das Objekt unabhängig bewegbaren Messkopfeinheit, die eine Abtasteinrichtung zum Erfassen der Oberfläche eines dreidimensionalen Objekts umfasst, und mit einer Positionsdetektionseinrichtung zum Erfassen der Position und der räumlichen Lage der Abtasteinrichtung. Erfindungswesentlich ist die Definition einer vorgegebenen Anzahl von zum Objekt feststehend positionierten ersten Messpunkten und die Definition derselben Anzahl von zur Messkopfeinheit feststehend positionierten zweiten Messpunkten jeweils in Bezug auf das Referenzsystem. Je ein erster und ein zweiter Messpunkt bilden ein Messpunkte-Paar. Die Positionsdetektionseinrichtung weist den Messpunkte-Paaren zugeordnete Abstandssensoren sowie eine Recheneinheit auf, durch die der jeweilige Abstand zwischen den Meßpunkten jedes Messpunkte-Paares erfasst wird und durch die aus den gemessenen Abständen im Zusammenhang mit den in Bezug auf das Referenzsystem definierten Messpunkten die Position und die räumliche Lage der Messkopfeinheit zum Objekt berechnet wird.

Die Abstandssensoren bzw. die Objekt-seitigen Teile der Abstandssensoren an den ersten Messpunkten sind direkt am Objekt oder an einer zum Objekt feststehend positionierten Halterung befestigt.

In einer vorteilhaften Weiterbildung der Erfindung weist die zum Objekt feststehend positionierte Halterung auch eine definierte Aufnahmeposition für die Messkopfeinheit auf. Dadurch liegt ein insbesondere im Hinblick auf den Kalibrierungsvorgang sehr einfacher Aufbau der erfindungsgemäßen Vorrichtung vor.

Durch die Erfindung wird ein zuverlässiges mobiles System geschaffen, das nach einmaliger Systemkalibrierung und Zuordnung zu einem Referenzsystem (insbesondere zu einem X,Y,Z-Koordinatensystem) flexibel einsetzbar ist.

In der Zeichnung ist ein Ausführungsbeispiels der Erfindung dargestellt Es zeigt
- Fig. 1: eine Systemkonfiguration zur Messpunkte-Definition,
- Fig. 2: eine Systemkonfiguration zur erstmaligen Kalibrierung und
- Fig. 3: eine beliebige Position der Messkopfeinheit während eines Messvorganges

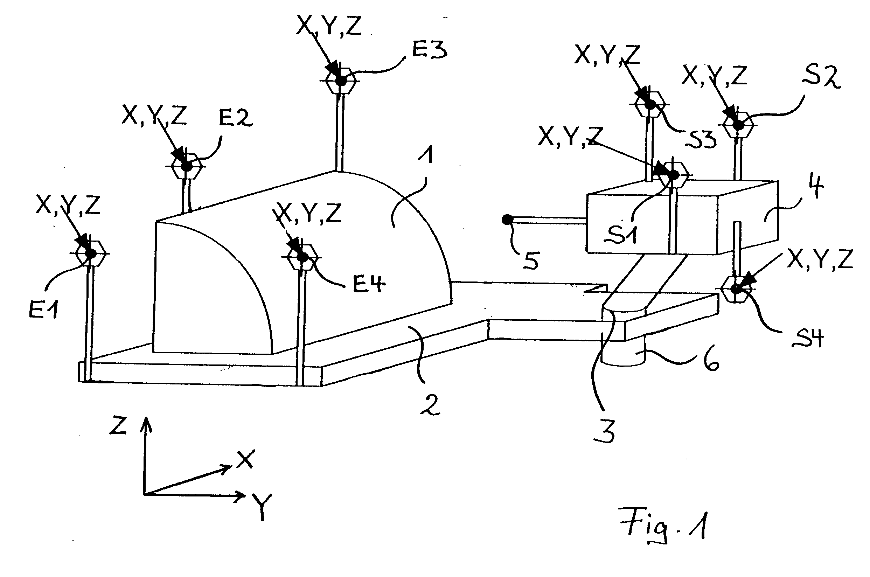

In Fig. 1 ist ein Objekt 1 in Bezug auf eine Halterung 2 feststehend positioniert. Vorzugsweise ist das Objekt 1 auf dieser Halterung 2 mit einer lösbaren Verbindung befestigt. Weiterhin weist die Halterung 2 eine definierte Aufnahmeposition 3 für eine Messkopfeinheit 4 auf. Die Messkopfeinheit 4 umfasst eine Abtasteinrichtung 5, z. B. in Form eines Messfühlers oder eines berührungslosen Laserscanners.

Die Position und die räumliche Lage der Messkopfeinheit 4 zum Objekt 1 wird mit Hilfe eines Referenzsystems, hier eines X,Y,Z-Koordinatensystems bestimmt. Hierzu sind vier, zum Objekt feststehend positionierte erste Messpunkte E1 bis E4 in Bezug auf das Referenzsystem (X,Y,Z Position) definiert. An jeder Position dieser vier Objekt-seitigen Messpunkte E1 bis E4 ist je ein Empfänger eines Abstandssensors über Teile (hier Haltestangen) der Halterung 2 angeordnet.

Weiterhin sind vier zur Messkopfeinheit 4 fest positionierte zweite Messpunkte S1 bis S4 ebenfalls in Bezug auf das Referenzsystem (X,Y,Z Position) definiert. In jeder Position dieser vier Meßkopf-seitigen Messpunkte S1 bis S4 ist je ein Sender eines Abstandssensors über Haltestangen an der Messkopfeinheit 4 befestigt. Je ein erster und ein zweiter Messpunkt bilden ein Messpunkte-Paar (E1/S1, E2/S2, E3/S3, E4/S4). Die Abstandssensoren bestehen hier also jeweils aus einem Objekt-seitigen Empfänger und aus einem Messkopf-seitigen Sender. Die Abstandssensoren können auch jeweils aus einem Messkopf-seitigen Empfänger und aus einem Objekt-seitigen Sender bestehen.

Die Positionsdetektionseinrichtung besteht aus den Abstandssensoren an den Messpunkte-Paaren (E1/S1, E2/S2, E3/S3, E4/S4) sowie aus einer (hier nicht dargestellten) Recheneinheit, die entweder auch in der Messkopfeinheit 4 oder in einem externen Systemrechner integriert ist. Ist die Recheneinheit Teil eines externen Systemrechners, findet die Kommunikation mit der Messkopfeinheit 4 beispielsweise über eine Kabel- oder über eine Funkverbindung statt.

Die Abstandssensoren bzw. die Empfänger der Abstandssensoren an den ersten Messpunkten können auch direkt am Objekt (1) befestigt sein.

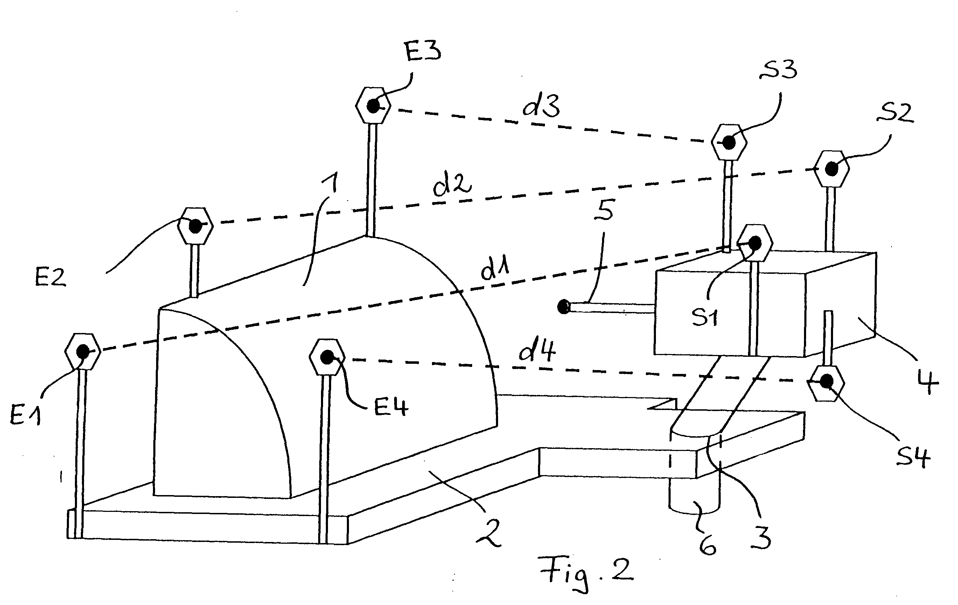

Durch die Abstandssensoren wird der jeweilige Abstand d1, d2, d3, d4 zwischen den Meßpunkten (X, Y, Z) jedes Messpunkte-Paares E1/S1, E2/S2, E3/S3, E4/S4 erfasst. Die Recheneinheit ermittelt aus den gemessenen Abständen d1, d2, d3, d4 (siehe gestrichelte Linien in Fig. 2) im Zusammenhang mit den in Bezug auf das Referenzsystem definierten Messpunkten, die der Recheneinheit ebenfalls als Information vorliegen, die Position und die räumliche Lage der Messkopfeinheit 4 zum Objekt 1. In Fig. 2 findet eine einmalige Kalibrierung statt, indem die Abstandsmessung in einer definierten Lage der Messkopfeinheit 4, hier in der Aufnahmeposition 3, zum Objekt 1 vorgenommen wird.

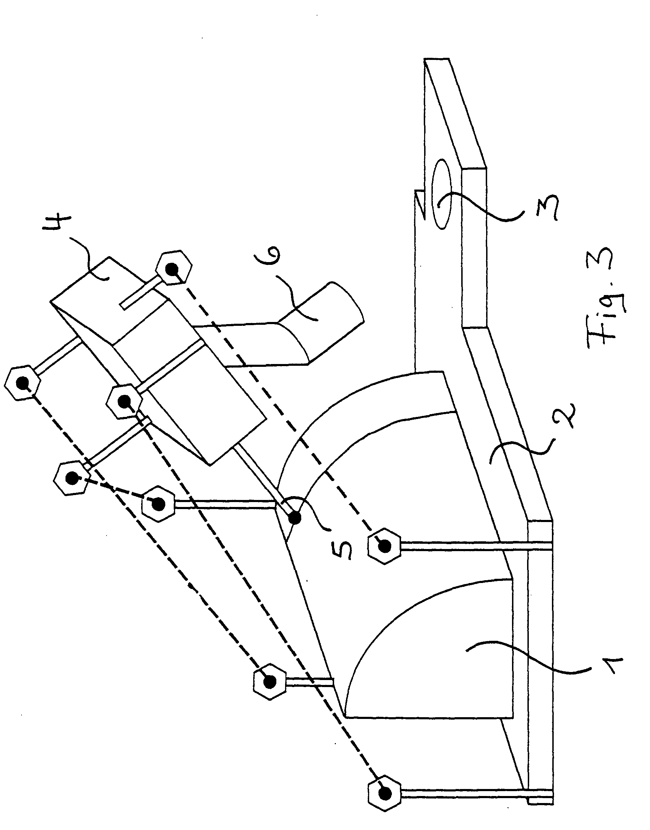

In Fig. 3 wird die Arbeitsweise der Vermessungsvorrichtung während eines Abbildungs- und Aufzeichnungsvorganges eines dreidimensionalen Objekts 1, bei der die Messkopfeinheit 4 aus der Aufnahmeposition 3 entfernt ist, veranschaulicht. Vorzugsweise weist die Messkopfeinheit 4 einen Griff 6 zur handbetätigten Führung der Messkopfeinheit 4 bzw. der Abtasteinrichtung (hier mit Messfühler 5) auf.

Die Vorteile des erfindungsgemäßen Ausführungsbeispiels wirken sich insbesondere bei der Designentwicklung von Fahrzeugmodellen als dreidimensionale Objekte aus. Denn in der Fahrzeugindustrie werden zeitgleich mehrere Fahrzeuge neu entwickelt, die zu unterschiedlichen Zwecken auch an unterschiedlichen Orten bearbeitet werden. Insbesondere durch die leichte Handhabbarkeit ist durch die Erfindung hierfür ein mobiles Vermessungssystem geschaffen. Nach der ersten Kalibrierung kann die erfindungsgemäße Vermessungsvorrichtung überall eingesetzt werden. Das Objekt 1 kann auch bearbeitet und verändert werden. Hierzu kann das Objekt 1 zeitweise aus der Halterung 2 genommen werden und anschließend in der vorher definierten Lage zu den ersten Messpunkten E1 bis E4 wieder mit der Halterung 2 verbunden werden. Falls die Objekt-seitigen Teile der Abstandssensoren direkt am Objekt angebracht sind, können diese auch zeitweise entfernt werden und anschließend an den definierten Messpunkten E1 bis E4 wieder positioniert werden.

## Patentansprüche

1. Vermessungsvorrichtung zum Abbilden und Aufzeichnen eines dreidimensionalen Objekts mit einer in Bezug auf das Objekt unabhängig bewegbaren Messkopfeinheit, die eine Abtasteinrichtung zum Erfassen der Oberfläche eines dreidimensionalen Objekts umfasst, und mit einer Positionsdetektionseinrichtung zum Erfassen der Position und der räumlichen Lage der Abtasteinrichtung, dadurch gekennzeichnet, dass eine vorgegebene Anzahl von zum Objekt (1) feststehend positionierten ersten Messpunkten (E1 bis E4) und dieselbe Anzahl von zur Messkopfeinheit (4) feststehend positionierten zweiten Messpunkten (S1 bis S4) jeweils in Bezug auf das Referenzsystem definiert werden, dass je ein erster und ein zweiter Messpunkt ein Messpunkte-Paar (E1/S1, E2/S2, E3/S3, E4/S4) bilden und dass die Positionsdetektionseinrichtung den Messpunkte-Paaren zugeordnete Abstandssensoren sowie eine Recheneinheit aufweist, durch die der jeweilige Abstand (d1, d2, d3, d4) zwischen den Meßpunkten jedes Messpunkte-Paares (E1/S1, E2/S2, E3/S3, E4/S4) erfasst wird und durch die aus den gemessenen Abständen im Zusammenhang mit den in Bezug auf das Referenzsystem definierten Messpunkten die Position und die räumliche Lage der Messkopfeinheit (4) zum Objekt (1) berechnet wird.

2. Vermessungsvorrichtung nach Patentanspruch 1, dadurch gekennzeichnet, dass die Abstandssensoren bzw. die Objekt-seitigen Teile der Abstandssensoren an den ersten Messpunkten (E1 bis E4) direkt am Objekt (1) befestigt sind.

3. Vermessungsvorrichtung nach Patentanspruch 1, dadurch gekennzeichnet, dass die Abstandssensoren bzw. die Objekt-seitigen Teile der Abstandssensoren an den ersten Messpunkten (E1 bis E4) an einer zum Objekt (1) feststehend positionierten Halterung (2) befestigt sind.

4. Vermessungsvorrichtung nach einem der Patentansprüche 1 bis 3, dadurch gekennzeichnet, dass die zum Objekt (1) feststehend positionierte Halterung (2) auch eine definierte Aufnahmeposition (3) für die Messkopfeinheit (4) aufweist.
